(19) Europäisches Patentamt
European Patent Office
Office européen des brevets

(11) EP 4 768 222 A1

(12) EUROPÄISCHE PATENTANMELDUNG

(43) Veröffentlichungstag:
01.07.2026 Patentblatt 2026/27

(21) Anmeldenummer: 25209082.4

(22) Anmeldetag: 16.10.2025

(51) Internationale Patentklassifikation (IPC):
B29C 45/73 (2006.01)       B29C 35/00 (2006.01)
B29C 45/78 (2006.01)       B29C 45/84 (2006.01)
G05D 16/00 (2006.01)       G05D 16/20 (2006.01)

(52) Gemeinsame Patentklassifikation (CPC):
B29C 45/7306; B29C 35/007; B29C 45/78;
B29C 45/84; G05D 23/1919; B29C 2945/76006;
B29C 2945/7604; B29C 2945/76056;
B29C 2945/76304; B29C 2945/76498;
B29C 2945/76531; B29C 2945/76929;
B29C 2945/76939; B29C 2945/76943

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH LA MA MD TN

(30) Priorität: 18.11.2024 AT 509082024

(71) Anmelder: ENGEL AUSTRIA GmbH
4311 Schwertberg (AT)

(72) Erfinder:
• Grasböck, Paul Bartholomäus
4222 Sankt Georgen an der Gusen (AT)
• Schläger, Mathias
4232 Hagenberg im Mühlkreis (AT)

(74) Vertreter: Torggler & Hofmann Patentanwälte -
Innsbruck
Torggler & Hofmann Patentanwälte GmbH & Co
KG
Wilhelm-Greil-Straße 16
6020 Innsbruck (AT)

(54) ÜBERWACHUNGSEINHEIT UND ÜBERWACHUNGSVERFAHREN

(57) Überwachungseinheit für ein Temperiersystem (2) für ein Formwerkzeug (3) und/oder eine Formgebungsmaschine (4), wobei die Überwachungseinheit (1) ein Eingabemodul (5) sowie einen Prozessor (6) beinhaltet und wobei das Eingabemodul (5) dazu ausgebildet ist,
- eine erste Eingabe entgegenzunehmen, welche für eine thermodynamische Größe, insbesondere eine Temperatur, und/oder eine Zusammensetzung eines Temperiermediums steht, und
- eine zweite Eingabe entgegenzunehmen, welche für einen Druck des Temperiermediums steht,

wobei der Prozessor (6) dazu ausgebildet ist, den Minimaldruck mit dem Dampfdruck zu vergleichen und ein Ausgabesignal zu erzeugen, falls der Minimaldruck niedriger als der Dampfdruck und/oder niedriger als der Dampfdruck plus einem definierten Offset ist.

Fig. 1

EP 4 768 222 A1

**Beschreibung**

Die vorliegende Offenbarung betrifft eine Überwachungseinheit für ein Formwerkzeug und/oder eine Formgebungsmaschine.

Beispielsweise bei Spritzgießmaschinen ist es bekannt und üblich, das Formwerkzeug zu temperieren, das heißt zu kühlen oder zu heizen. Dadurch wird die Temperatur des an der Spritzgießmaschine montierten Formwerkzeugs so eingestellt, dass der Formgebungsprozess verbessert oder überhaupt ablaufen kann. Beispielsweise wird das Formwerkzeug gekühlt, um ein schnelles Erstarren der produzierten Formteile zu erzielen. Auch das Heizen des Formwerkzeugs ist in manchen Teilen des Formgebungsprozesses vorteilhaft, um beispielsweise die Fließeigenschaften der Formmasse positiv zu beeinflussen oder um Wärmeflüsse an die Umgebung auszugleichen.

Bekannt ist es des Weiteren, dass in Temperierkreisen, welche das Formwerkzeug durchsetzen, Temperiermedium, beispielsweise Wasser, geführt wird. Das Temperiermedium nimmt dabei Wärme auf oder gibt sie ab, sodass das Formwerkzeug gekühlt oder erwärmt, d.h. allgemein temperiert, wird.

In den Temperierkreisen können Drosselventile vorhanden sein, welche die Menge oder die Geschwindigkeit (oder den Volumenstrom) des Temperiermediums beeinflussen, sodass die Temperierung gesteuert oder geregelt werden kann.

Stand der Technik, welcher die Temperierung des Formwerkzeugs oder der Formgebungsmaschine betrifft, ist vielfältig. Beispielsweise in der EP 2762291 A1, der EP 3173208 A1 und der EP 3309402 A1 der Anmelderin werden verschiedene Maßnahmen für die Optimierung der Energieeffizienz der Temperierung beschrieben. Generell gilt, dass die Energieeffizienz sinkt, je stärker die Drosselventile geschlossen sind.

Es wurden verfrühte und unerklärte Schäden solcher Drosselventile beobachtet, die natürlich zu unerwünschten Stillständen der Formgebungsanlage führen. Insbesondere wurden die Schäden an den Ventilsitzen beobachtet.

Die Aufgabe war es, verfrühte Schäden von Ventilen in Temperierkreisen zu vermeiden.

Diese Aufgabe wird durch eine Überwachungseinheit gemäß Anspruch 1 gelöst, nämlich durch eine Überwachungseinheit für ein Temperiersystem für ein Formwerkzeug und/oder eine Formgebungsmaschine, wobei die Überwachungseinheit ein Eingabemodul sowie einen Prozessor beinhaltet und wobei das Eingabemodul dazu ausgebildet ist,

- eine erste Eingabe entgegenzunehmen, welche für eine thermodynamische Größe, insbesondere eine Temperatur, und/oder eine Zusammensetzung eines Temperiermediums steht, und
- eine zweite Eingabe entgegenzunehmen, welche für einen Druck des Temperiermediums steht,

wobei des Weiteren der Prozessor dazu ausgebildet ist,

- aus der für die thermodynamische Größe und und/oder die Zusammensetzung des Temperiermediums stehenden ersten Eingabe einen Dampfdruck des Temperiermediums zu berechnen,
- aus der für den Druck stehenden zweiten Eingabe einen Minimaldruck des Temperiermediums in einem zu betrachtenden Bereich des Temperiersystems zu berechnen oder die für den Druck stehende zweite Eingabe als Minimaldruck im zu betrachtenden Bereich zu verwenden sowie
- den Minimaldruck mit dem Dampfdruck zu vergleichen und ein Ausgabesignal zu erzeugen, falls der Minimaldruck niedriger als der Dampfdruck und/oder niedriger als der Dampfdruck plus einem definierten Offset ist.

Die Aufgabe wird durch ein Überwachungsverfahren gemäß Anspruch 13 gelöst, nämlich ein Überwachungsverfahren zum Überwachen eines Temperiersystems für ein Formwerkzeug und/oder eine Formgebungsmaschine, wobei folgende Schritte durchgeführt werden:

- Bereitstellen einer thermodynamischen Größe, insbesondere einer Temperatur, und/oder einer Zusammensetzung eines Temperiermediums,
- Bereitstellen eines Drucks des Temperiermediums,
- Berechnen eines Dampfdrucks des Temperiermediums aus der thermodynamischen Größe und/oder der Zusammensetzung des Temperiermediums,
- Berechnen eines Minimaldrucks des Temperiermediums in einem zu betrachtenden Bereich des Temperiersystems aus dem Druck des Temperiermediums oder Verwenden des Drucks des Temperiermediums als Minimaldruck im zu betrachtenden Bereich sowie
- Vergleichen des Minimaldrucks mit dem Dampfdruck und Einleiten einer Aktion, falls der Minimaldruck niedriger als der Dampfdruck und/oder niedriger als der Dampfdruck plus einem definierten Offset ist.

Die Aufgabe wird durch ein Computerprogrammprodukt gemäß Anspruch 15 gelöst, nämlich ein Computerprogrammprodukt zum Überwachen eines Temperiersystems beinhaltend Befehle, welche einen ausführenden Computer zum Durchführen der folgenden Schritte veranlassen:

- Entgegennehmen einer ersten Eingabe, welche für eine thermodynamische Größe, insbesondere eine Temperatur, und/oder eine Zusammensetzung eines Temperiermediums steht,
- Entgegennehmen einer zweiten Eingabe, welche für einen Druck des Temperiermediums steht,
- Berechnen eines Dampfdrucks aus der für die thermodynamische Größe und und/oder die Zusammensetzung des Temperiermediums stehenden ersten Eingabe,

- Berechnen eines Minimaldrucks des Temperiermediums in einem zu betrachtenden Bereich des Temperiersystems aus der für den Druck stehenden zweiten Eingabe oder Verwenden des Drucks als Minimaldruck im zu betrachtenden Bereich sowie

- Vergleichen des Minimaldrucks mit dem Dampfdruck und Erzeugen eines Ausgabesignals, falls der Minimaldruck niedriger als der Dampfdruck und/oder niedriger als der Dampfdruck plus einem definierten Offset ist.

Trotz der angesprochenen Bemühungen hinsichtlich der Energieeffizienz ist es in der Praxis unvermeidbar, dass Drosselventile bei der Temperierung gewisser Formgebungsprozesse nur mit einem recht geringen Öffnungsgrad betrieben werden.

Untersuchungen der Anmelderin haben ergeben, dass bei recht geringem Öffnungsgrad der Drosselventile - nur in gewissen Situationen - ein starker Verschleiß der Drosselventile auftreten kann. Bei den in der Praxis verwendeten Ventilen für die Temperierung von Formgebungsprozessen führt der erhöhte Verschleiß zwar zunächst nicht zu einer verschlechterten Funktion der Ventile, aber es treten bei den verschlissenen Ventilen verfrühte irreparable Schäden auf. Soweit ersichtlich war es bis dato unbekannt, worauf diese verfrühten Totalschäden zurückzuführen waren. Diese internen Untersuchungen bildeten den Ausgangspunkt für die vorliegende Offenbarung.

Bei einer näheren Analyse im Rahmen der vorliegenden Offenbarung hat sich herausgestellt, dass dieser starke Verschleiß auf kollabierende Dampfbläschen im jeweiligen Ventil zurückzuführen ist. An den Ventilen ergibt sich ein komplexes Zusammenspiel aus dem in Abhängigkeit des Volumenstroms auftretenden Druckabfall und dem jeweiligen Öffnungsgrad des Ventils. Das kann dazu führen, dass lokal am Ventil der Dampfdruck des Temperiermediums unterschritten wird, wodurch das Temperiermedium verdampft und sich an der Stelle des lokalen Druckabfalls Gasbläschen im Temperiermedium bilden. Untersuchungen der Anmelderin haben ergeben, dass es ein erhöhtes Risiko für das Unterschreiten des Dampfdrucks bei mittleren Öffnungsgraden der Ventile zu geben scheint.

Nach Passieren der Stelle des lokalen Druckabfalls implodieren die Gasbläschen. Durch den Kollaps der Gasbläschen treten im - meist inkompressiblen - Temperiermedium Stoßwellen oder Druckstöße mit überraschend starker Intensität auf. Der Effekt von implodierende Dampfblasen ist ein an und für sich bekannter Schädigungsmechanismus. Die Stoßwellen verursachen beim Auftreffen auf Bauteile des Ventils, insbesondere den Ventilsitz den erwähnten Verschleiß, der nach vergleichsweise kurzer Zeit zur Schädigung des Ventils führen kann. Im Folgenden wird dies als der Verschleißmechanismus bezeichnet.

Zu erwähnen ist, dass auch andere hydraulische Elemente in den Temperierkreisen von diesem Verschleißmechanismus betroffen sein können, beispielsweise an gewissen Geometrien, über welche ein Temperierkreis in ein Formwerkzeug eintritt.

Eine weitere Erkenntnis der vorliegenden Offenbarung besteht darin, dass bereits bei üblichen Temperiersystemen für Formgebungsmaschinen und Formwerkzeuge Messwerte, Information und/oder Wissen der Bediener vorhanden sind, welches ausreicht, dass der Dampfdruck des Temperiermediums, zumindest näherungsweise, berechnet werden kann.

Ein weiterer Aspekt der vorliegenden Offenbarung liegt in der noch weitergehenden Erkenntnis, dass es auch möglich ist, den in demjenigen Bereich des Temperiersystems vorliegenden minimalen Druck, zumindest näherungsweise, zu bestimmen, welcher für die Vermeidung des Unterschreitens des Dampfdrucks betrachtet wird.

Liegt dieser Minimaldruck signifikant höher als der Dampfdruck kann der oben beschriebene Verschleißmechanismus praktisch nicht eintreten, es sei denn die Berechnungen oder Eingaben sind unrichtig.

Liegt der Minimaldruck niedriger als der Dampfdruck muss mit dem Auftreten des oben beschriebenen Verschleißmechanismus gerechnet werden. Durch Erzeugen des Ausgabesignals oder Einleiten einer Aktion kann der beschriebene Verschleißmechanismus dann unterbunden werden oder es kann zumindest vorsehbar werden, wie lange ein entsprechendes Bauteil im Temperiersystem, insbesondere ein Drosselventil, potenziell dem Verschleißmechanismus ausgesetzt war.

Bevorzugt werden dafür Daten aufgezeichnet.

Drosselventile werden mitunter auch als "Regelventile" bezeichnet, auch wenn sie im technischen Sinne nicht geregelt sind. Allgemein formuliert handelt es sich um Ventile mit veränderlichem Öffnungsgrad, welche die Fließgeschwindigkeit, die Menge und/oder den Volumenstrom des Temperiermediums beeinflussen.

Die vorliegende Offenbarung sieht also vor, durch eine gewisse "Regelung" des Drucks zu vermeiden, dass das Temperiermedium in mehr als einer Phase oder in einer Dampfphase auftritt und dadurch erhöhter Verschleiß auftritt.

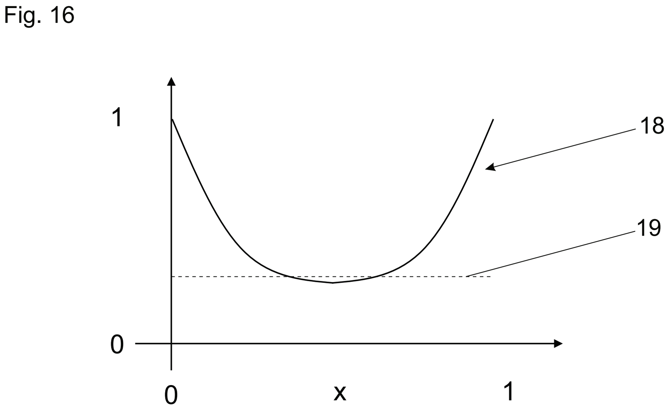

Der Dampfdruck und der Minimaldruck können bevorzugt als absolute Druckgröße formuliert sein. In alternativen, ebenso bevorzugten, Ausführungsformen können der Dampfdruck und der Minimaldruck als relative Größen, beispielsweise als Druckverhältnisse (wie beispielsweise in Verbindung mit Fig. 16 offenbart), formuliert sein und gemäß der vorliegenden Offenbarung in dieser Formulierung verglichen werden. Denkbar ist es auch den Dampfdruck und den Minimaldruck als andere abgeleitete Größe zu formulieren, beispielsweise indem aus dem Dampfdruck und dem Minimaldruck durch arithmetische Operationen und/oder Bilden einer Ableitung und/oder eines Integrals abgeleitete Größen definiert werden, deren Informationsgehalt zum Dampfdruck und zum Minimaldruck äquivalent sind und die dann gemäß der vorliegenden Offenbarung verglichen werden können.

Zu erwähnen ist, dass der Dampfdruck mit einem vordefinierten Offset versehen werden kann, sodass der Minimaldruck nicht nur knapp über dem Dampfdruck gehalten wird, sondern davon einen gewissen vordefinierten Abstand einhält. Auf diese Weise kann das Risiko des Auftretens des Verschleißmechanismus wie gewünscht verringert werden.

Der definierte Offset kann ein vordefinierter Offset sein, der beispielsweise einfach in der Überwachungseinheit hinterlegt ist oder es kann sich um einen, bevorzugt durch die Überwachungseinheit oder den ausführenden Computer, berechneten Offset handeln.

In bevorzugten Ausführungsformen ist der definierte Offset geringer als 0,7 bar, bevorzugt kleiner als 0,5 bar und besonders bevorzugt etwa 0,3 bar.

Der berechnete Offset kann bevorzugt weniger als 20 %, besonders bevorzugt weniger als 10 % oder weniger als 5 %, des berechneten Dampfdrucks betragen.

Der Offset wird im Rahmen der vorliegenden Offenbarung als additiver Offset beschrieben, der zum berechneten Dampfdruck addiert wird. Darunter zu subsummieren und mathematisch gleich sind aber beispielsweise auch gewisse mathematische Formulierungen, wobei der Offset mit einem Faktor formuliert ist.

Die erste Eingabe und/oder die zweite Eingabe können von einem Bediener stammen. Bevorzugt sind aber Ausführungsformen, wobei die erste Eingabe und/oder die zweite Eingabe zumindest teilweise, vorzugsweise vollständig, Messsignale von verschiedenen Sensoren sind. Abweichend davon kann die erste Eingabe bevorzugt auch eine Bedienereingabe beinhalten, welche die Zusammensetzung des Temperiermediums betrifft.

Zu erwähnen ist, dass die zweite Eingabe nicht unbedingt ein Druck des Temperiermediums sein muss. Unter gewissen kontrollierten Umständen könnte beispielsweise auch eine Strömungsgeschwindigkeit oder ein Volumenstrom des Temperiermediums in einem eindeutigen eins-zu-eins Zusammenhang mit dem Druck des Temperiermediums an einer gewissen Stelle stehen, sodass diese Größen dann im Sinne der vorliegenden Offenbarung für den Druck des Temperiermediums stehen.

Das Temperiermedium kann bevorzugt hauptsächlich Wasser, gegebenenfalls mit Zusätzen sein.

Es ist auch möglich, eine Zusammensetzung des Temperiermediums zu messen, beispielsweise über eine Leitfähigkeitsmessung können aussagekräftige Daten über das Temperiermedium in Erfahrung gebracht werden. Beispielsweise gelöste Salze können den Dampfdruck von Wasser als Temperiermedium signifikant beeinflussen.

Es kann auch vorteilhaft sein, in an und für sich bekannter Weise einen Partikelgehalt zu messen, da Verunreinigungen in Form von Partikeln im Temperiermedium als Verdampfungskeime oder Kondensationskeime dienen können, die das Bilden von Gasbläschen im Temperiermedium fördern können, sodass sie effektiv den Dampfdruck senkend wirken.

In einer besonders einfachen Ausführungsform der vorliegenden Offenbarung kann aber einfach damit gerechnet werden, dass das Temperiermedium Wasser ist. Damit kann der bekannte Dampfdruck von Wasser bei der jeweilig gemessenen Temperatur verwendet werden. Die von der Anmelderin durchgeführten Untersuchungen zeigen, dass bereits mit dieser einfachen Ausführung sehr gute Ergebnisse zum Erkennen und Vermeiden des Verschleißmechanismus erzielt werden können.

Festzuhalten ist, dass der Dampfdruck derjenige Druck ist, bei dem bei einer vorgegebenen Temperatur eine Flüssigkeit und ihr Dampf im thermodynamischen Gleichgewicht vorliegen.

An und für sich bekannt ist es, den Dampfdruck von Zusammensetzungen mittels des Raoultschen Gesetzes zu bestimmen.

Beispielsweise wird Glycol regelmäßig als Zusatz im Temperiermedium (beispielsweise hauptsächlich Wasser) verwendet. Hier kann das Raoultsche Gesetz verwendet werden, um den Dampfdruck zu berechnen.

Aus einem Druck des Temperiermediums kann auf einen Minimaldruck im zu betrachtenden Bereich des Temperiersystems geschlossen werden. Beispielsweise kann in einer besonders einfachen Ausgestaltung der vorliegenden Offenbarung ein Drucksensor einfach an jener Stelle eines Temperierkreises positioniert werden, an welcher mit dem geringsten Druck im zu betrachtenden Bereich gerechnet wird und der mit diesem Drucksensor erfasste Druck als Minimaldruck verwendet werden.

In ausgefeilteren Ausführungsformen kann ein Drucksensor in der Nähe eines Drosselventils angeordnet werden und vorab ermittelt werden, bei welchem Öffnungsgrad, welcher Druckabfall am Drosselventil auftritt. Der Minimaldruck im Bereich des Drosselventils kann dann beispielsweise durch Subtrahieren des Druckabfalls beim gerade vorliegenden Öffnungsgrad vom gemessenen Druck berechnet werden.

Selbstverständlich ist, dass die erwähnten Messungen, beispielsweise von Drücken und Temperaturen nicht räumlich oder zeitlich singulär sein müssen. Vielmehr können Sensoren an verschiedenen Stellen vorgesehen sein und/oder zeitlich periodisch Messungen vornehmen.

Aus einer solchen Vielzahl von Messwerten können statistische Größen, wie beispielsweise Mittelwerte, generiert werden, um die Genauigkeit der Analyse insgesamt zu verbessern.

Ebenso selbstverständlich ist es, dass die Berechnungsergebnisse des Dampfdrucks und des Minimaldrucks sowie die Eingaben der thermodynamischen Größe, der Zusammensetzung und des Drucks nicht unendlich präzise sein müssen, was ohnehin unmöglich wäre. Vielmehr müssen diese Größen jeweils zumindest näherungsweise vorliegen. Die Anforderungen an die Genauigkeit der jeweiligen Berechnung müssen lediglich so sein, dass zumindest mit einer gewissen Minimalzuverlässigkeit weit weg von einer perfekten Zuverlässigkeit auf das potenzielle Auftreten des Verschleißmechanismus geschlossen werden kann.

Schutz begehrt wird außerdem für ein Temperiersystem mit einem Temperierkreis oder mehreren Temperierkreisen sowie einer Überwachungseinheit gemäß der vorliegenden Offenbarung.

Zu erwähnen ist, dass es sich bei Temperierkreisen nicht notwendigerweise um echte Kreisläufe handeln muss. Üblich ist es beispielsweise, aus einer Versorgung am Betriebsstandort Temperiermedium zu verwenden (sogenannter zentraler Vorlauf), wobei der Temperiermedienstrom in mehrere "Kreise" aufgeteilt wird, durch das zu temperierende Element geführt wird und in einem gemeinsamen Rücklauf wieder dem Versorgungssystem übergeben wird. Beim Ausdruck Temperierkreis handelt es sich also um eine gewisse Fehlbezeichnung, die hier verwendet wird, weil sie sich in der Fachsprache eingebürgert hat.

Statt dieser parallel geschalteten Temperierkreisen ist es aber durchaus auch bekannt, wenn auch weniger üblich, die Temperierkreise seriell zu schalten.

Der erwähnte zu betrachtende Bereich des Temperiersystems, für welchen der Minimaldruck bestimmt wird, kann bevorzugt ein Temperierkreis vom Vorlauf bis zum Rücklauf sein, exklusive (bevorzugt) oder inklusive Vorlauf und/oder Rücklauf.

Bei parallel geschalteten Temperierkreisen wird die vorliegende Offenbarung bevorzugt für die einzelnen Temperierkreise separat oder individuell angewendet.

Zu erwähnen ist außerdem, dass die Überwachungseinheiten gemäß der vorliegenden Offenbarung auch bei anderen Systemen außer Temperiersystemen zum Einsatz kommen kann, beispielsweise bei einer Versorgung von Formgebungsmaschinen mit anderen Medien oder in der Gebäudetechnik.

Schutz begehrt wird außerdem für eine Formgebungsanlage mit einer Formgebungsmaschine und/oder einem Formwerkzeug sowie einem Temperiersystem gemäß der vorliegenden Offenbarung.

Formgebungsmaschinen sind beispielsweise Spritzgießmaschinen, Druckgussmaschinen, Pressen, Spritzpressen und dergleichen.

Entsprechende Formwerkzeuge werden an den Formgebungsmaschinen montiert und formen dann durch das Betreiben der Formgebungsmaschine das jeweils gewünschte Formteil. Formwerkzeuge können offen oder geschlossen ausgeführt werden.

Zu erwähnen ist, dass die Überwachungseinheit gemäß der vorliegenden Offenbarung bevorzugt in eine Maschinensteuerung der Formgebungsmaschine integriert sein kann.

Ebenso denkbar ist es aber, dass die Überwachungseinheit separat von der Formgebungsmaschine realisiert ist, beispielsweise in einem separaten Anlagenteil, realisiert durch einen Computerserver, der nicht in geographischer Nähe zur Formgebungsanlage vorhanden sein muss und/oder realisiert durch verteiltes Rechnen.

Die Maschinensteuerung der Formgebungsmaschine, der Computerserver oder die Rechner, die gemeinsam ein verteiltes Rechnen realisieren, können jene Computer sein, welche das Computerprogrammprodukt ausführen.

Das Temperiersystem kann ebenfalls Teil der Formgebungsmaschine sein oder separat von ihr ausgebildet sein, beispielsweise mittels eines sogenannten Temperiergeräts.

Schutz begehrt wird des Weiteren für eine Verwendung einer Überwachungseinheit, ein Temperiersystem oder eine Formgebungsanlage bei einem Verfahren jeweils gemäß der vorliegenden Offenbarung.

Schutz begehrt wird des Weiteren für einen transitorischen oder nicht-transitorischen Datenträger mit einem Computerprogrammprodukt gemäß der vorliegenden Offenbarung.

Schutz begehrt wird des Weiteren für ein Datenträgersignal mit einem Ausgabesignal,

- das von einer Überwachungseinheit und/oder einem Temperiersystem und/oder einer Formgebungsanlage jeweils gemäß der vorliegenden Offenbarung erzeugt wurde und/oder
- das als durch ein Überwachungsverfahren gemäß der vorliegenden Offenbarung als ausgelöste Aktion ausgegeben wurde und/oder
- das durch Ausführen eines Computerprogrammprodukts gemäß der vorliegenden Offenbarung generiert wurde.

Selbstverständlich ist es, dass die hier erwähnten oder gezeigten Elemente, soweit sie im Singular erwähnt oder singulär gezeigt sind, natürlich auch im Plural oder mehrfach vorliegen können.

Das Eingabemodul kann dazu ausgebildet sein, die erste Eingabe in Form eines das Temperiermedium betreffenden Temperaturmesssignals entgegenzunehmen.

Das Eingabemodul kann dazu ausgebildet sein, die erste Eingabe in Form einer Benutzereingabe betreffend die thermodynamische Größe und/oder die Zusammensetzung des Temperiermediums entgegenzunehmen.

In einem Speicher der Überwachungseinheit kann ein Druckabfall eines hydraulischen Elements, insbesondere eines Drosselventils, hinterlegt sein, wobei der Prozessor dazu ausgebildet ist, den Minimaldruck im zu betrachtenden Bereich des Temperiersystems aus der für den Druck des Temperiermediums stehenden zweiten Eingabe und dem Druckabfall zu berechnen.

Der Druckabfall kann in Form eines Zusammenhangs, bevorzugt einer Look-up-Tabelle, im Speicher hinterlegt sein, wobei der Zusammenhang den Druckabfall je nach Öffnungsgrad des Drosselventils und optional je nach dem anliegenden Druck und/oder einer Druckdifferenz und/oder eines Volumenstroms ausgibt. Der Einfluss der Medientemperatur kann hier alternativ oder zusätzlich ebenfalls berücksichtigt werden.

Beim anliegenden Druck, der Druckdifferenz, dem Volumenstrom und/oder der Medientemperatur kann es sich bevorzugt um gemessene Größen oder aus gemessenen Größen berechnete Größen handeln.

Der Zusammenhang kann durch Berechnungen, Simulationen oder Versuche beschafft werden.

Zu erwähnen ist, dass der Speicher nicht in der physischen Überwachungseinheit lokalisiert sein muss. Beispielsweise kann der Speicher als Zugriff auf eine Online-Datenbank realisiert sein. In bevorzugten Ausführungsbeispielen kann der Speicher aber physisch in der Überwachungseinheit oder einer Maschinensteuerung der Formgebungsmaschine vorhanden sein.

Das Ausgabesignal kann zumindest eines der folgenden beinhalten:

- Warnhinweis für einen Bediener oder ein übergeordnetes Überwachungssystem
- Ansteuersignal für ein Drosselventil, bevorzugt in Form eines Ansteuersignals zum Verändern, bevorzugt Erhöhen, des Öffnungsgrads des Drosselventils und/oder in Form eines Grenzöffnungsgrads, bevorzugt eines Mindestöffnungsgrads, des Drosselventils
- Ansteuersignal für eine eine Versorgungspumpe aufweisende Versorgungseinheit zum Verändern, einer Förderleistung und/oder zum Verändern, bevorzugt Erhöhen, eines Systemdrucks oder Rücklaufdrucks.

Der Systemdruck kann beispielsweise ein minimal zulässiger Systemdruck sein.

Die Versorgungseinheit kann zusätzlich zur Versorgungspumpe einen Kühler (außen oder innen), einen Wärmetauscher, eine Heizung, eine Dosiervorrichtung für Zusätze, wie beispielsweise Glycol, und/oder ein Temperiergerät beinhalten.

Das Ausgabesignal, beispielsweise in Form eines Warnhinweises, kann auch dafür genutzt werden, abzuschätzen, für wie lange der Verschleißmechanismus bei einem gewissen hydraulischen Element gewirkt hat. Derartige Größen werden auch als Belastungskollektiv bezeichnet. Sie erlauben im Weiteren eine Abschätzung für die weitere Lebensdauer des Elements.

Die verschiedenen erwähnten Ansteuersignale können dazu eingesetzt werden, den Verschleißmechanismus aktiv zu unterbinden oder zumindest weniger wahrscheinlich zu machen.

Die Ansteuersignale oder der Warnhinweis können als Beispiel für eine Aktion aufgefasst werden, die gemäß den Verfahren der vorliegenden Offenbarung eingeleitet werden, falls der Minimaldruck niedriger als der Dampfdruck ist.

Das Ausgabesignal kann ein erstes Ansteuersubsignal für ein vorlaufseitiges Drosselventil zum Verringern des Öffnungsgrads und ein zweites Ansteuersubsignal für ein rücklaufseitiges Drosselventil zum Erhöhen des Öffnungsgrads beinhalten. Dadurch kann das rücklaufseitige Drosselventil, an dem der Verschleißmechanismus häufiger zu erwarten ist, mit einem höheren Öffnungsgrad betrieben werden, sodass der Verschleißmechanismus unterbunden werden kann.

Zur Realisierung von mehreren Temperierkreisen kann bevorzugt ein vorlaufseitiger Temperiermedienverteiler und/oder ein rücklaufseitiger Temperiermediensammler vorgesehen sein.

Je Temperierkreis kann ein Drosselventil vorgesehen sein. Bevorzugt kann ein vorlaufseitiges Drosselventil und/oder ein rücklaufseitiges Drosselventil vorgesehen sein.

Es können ein Sensor oder mehrere Sensoren vorgesehen sein, welche(r) zum Messen zumindest einer der folgenden Größen ausgebildet sind(ist):

- Druck, bevorzugt vorlaufseitig zentral und/oder vorlaufseitig individuell für den jeweiligen Temperierkreis und/oder rücklaufseitig individuell für den jeweiligen Temperierkreis und/oder rücklaufseitig zentral
- Temperatur, bevorzugt vorlaufseitig zentral und/oder rücklaufseitig zentral und/oder individuell für den jeweiligen Temperierkreis, bevorzugt stromabwärts des Formgebungswerkzeugs individuell für den jeweiligen Temperierkreis
- Volumenstrom, bevorzugt rücklaufseitig individuell für den jeweiligen Temperierkreis

Weitere Vorteile und Einzelheiten ergeben sich aus den Figuren sowie der dazugehörigen Beschreibung der Figuren. Es zeigt:

Fig. 1 bis 9      schematische Ansichten von Temperiersystemen in verschiedenen Ausführungsformen,

Fig. 10a und 10b      schematische Diagramme zu Ausführungsformen von Gegenmaßnahmen gegen den Verschleißmechanismus,

Fig. 11a und 11b      schematische Diagramme zu Ausführungsformen von Gegenmaßnahmen gegen den Verschleißmechanismus,

Fig. 12a und 12b      schematische Diagramme zu Ausführungsformen von Gegenmaßnahmen gegen den Verschleißmechanismus,

Fig. 13a und 13b      schematische Diagramme zu Ausführungsformen von Gegenmaßnahmen gegen den Verschleißmechanismus,

Fig. 14           schematisch eine Ausführungsform einer Überwachungseinheit,

Fig. 15           schematisch eine Ausführungsform einer Formgebungsanlage sowie

Fig. 16           ein Diagramm zur Verdeutlichung
der Drucksituation in einem Drosselventil.

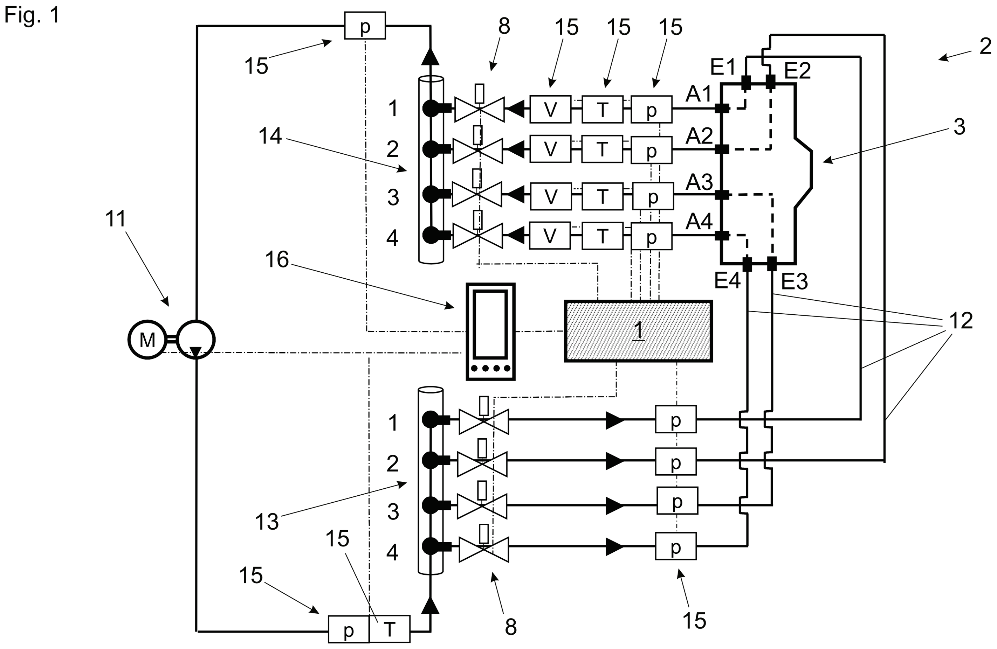

Fig. 1 zeigt eine Ausführungsform eines Temperiersystems mit einem vorlaufseitigen Temperiermedienverteiler 13 und einem rücklaufseitigen Temperiermediensammler 14.

Eine Versorgungspumpe 11 fördert Temperiermedium, beispielsweise Wasser, über den Vorlauf zum Temperiermedienverteiler 13, worin der Temperiermedienstrom in mehrere parallel geschaltete Temperierkreise 12 aufgeteilt wird.

Die Versorgungspumpe 11 kann bevorzugt Teil einer Versorgungseinheit sein, die zusätzlich beispielsweise Kühler (außen oder innen), einen Wärmetauscher, eine Heizung, eine Dosiervorrichtung für Zusätze, wie beispielsweise Glycol, und/oder ein Temperiergerät aufweist.

In den Figuren sind jeweils vier (#1 bis #4) Temperierkreise 12 dargestellt. Es sei aber festgehalten, dass auch eine beliebige andere Zahl von Temperierkreisen vorgesehen sein können.

Mittels der Temperierkreise 12 wird das Temperiermedium durch eine Hälfte eines Formwerkzeugs 3 gefördert (gestrichelt angedeutet), wobei das Temperiermedium Wärme mit dem Formwerkzeug austauscht, wodurch Wärme abgeführt wird, sodass ein allfällig im Formwerkzeug 3 befindliches Formmaterial zu einem Formteil erstarrt.

Anschließend wird das Temperiermedium in einem Temperiermediensammler 14 wird zu einem Rücklauf zusammengefasst und wieder der Versorgungspumpe 11 (oder einem Reservoir) zugeführt.

Zu bemerken ist, dass rücklaufseitig und/oder vorlaufseitig auch noch weitere hydraulische Elemente vorhanden sein können. Beispiele wären Wärmetauscher, Heizelemente und/oder Mischeinheiten, um das Temperiermedium auf eine gewünschte Temperatur zu bringen.

Zu erwähnen ist, dass die Temperierkreise 12 in diesem Ausführungsbeispiel als jene Teile des Systems verstanden werden, welche vom Temperiermedienverteiler 13 zum Formwerkzeug 3 (beispielsweise realisiert über Schläuche) durch das Formwerkzeug 3 (beispielsweise realisiert über Kanäle im Formwerkzeug 3) und schließlich zum Temperiermediensammler 14 (beispielsweise realisiert über Schläuche) führen.

Die Anschlüsse am Formwerkzeug 3 sind dabei durchnummeriert, nämlich E1 bis E4 für die vorlaufseitigen Anschlüsse und A1 bis A4 für die rücklaufseitigen Anschlüsse.

Außerdem sind im Temperiersystem 2 verschiedene Ventile 8 und Sensoren 15 vorhanden.

Die Drosselventile 8 dienen dazu den Fluss des Temperiermediums durch die Temperierkreise 12 zu erlauben und optional zu regulieren. Im Ausführungsbeispiel nach Fig. 1 sind je Temperierkreis 12 ein vorlaufseitiges Drosselventil 8 und ein rücklaufseitiges Drosselventil 8 vorgesehen.

Beispielsweise ist es bekannt, die Öffnungsgrade der Drosselventile 8 nach dem Volumenstrom durch das Formwerkzeug 3 und/oder nach einer Temperaturdifferenz stromaufwärts und stromabwärts des Formwerkzeugs 3 zu steuern oder zu regeln.

Die Sensoren 15 dienen zum Messen von thermodynamischen und/oder fließtechnischen Größen des Temperiermediums. In den Figuren sind die Sensoren 15 je nach der Art ihrer Messgröße mit Buchstaben versehen, nämlich wie folgt:

p      Druck
V      Volumenstrom
T      Temperatur

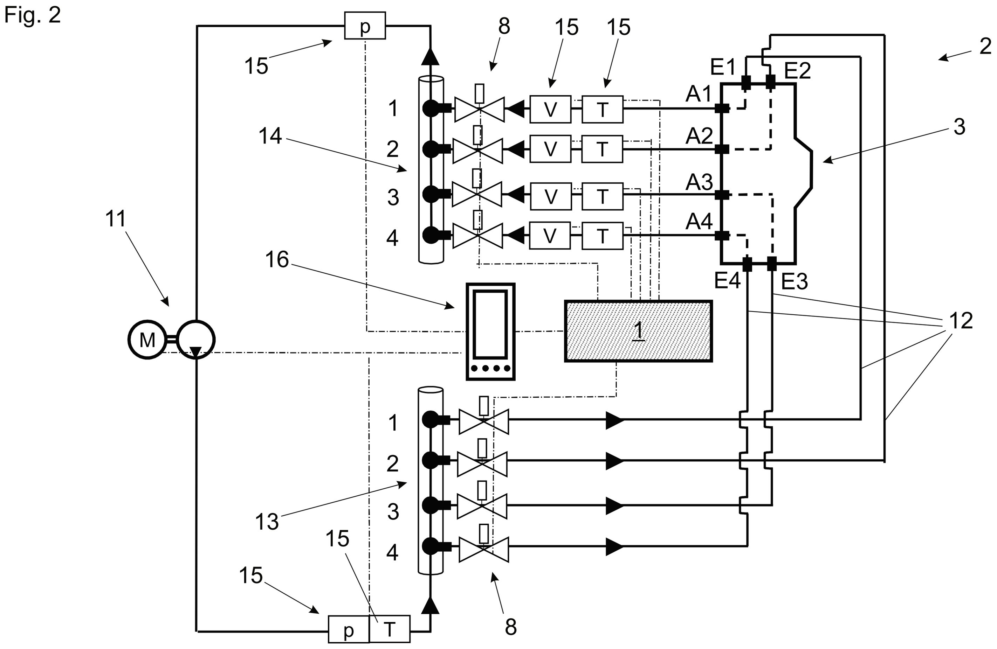

Die in Fig. 1 dargestellte Ausführung stellt hinsichtlich der Sensoren 15 in gewisser Weise eine Maximalausführung dar. In der Praxis sind nur in den seltensten Fällen alle dargestellten Sensoren 15 vorhanden. Häufig verwendete und daher wichtige Kombinationen von Sensoren 15 sind in den Fig. 2 bis 9 dargestellt, auf die nachstehend noch eingegangen wird.

In Fig. 1 ist symbolisch eine Überwachungseinheit 1 dargestellt. Sie kann als physisch separate Baueinheit oder bevorzugt (physisch und/oder softwaretechnisch) integriert in die Maschinensteuerung 16 der Formgebungsmaschine 4 ausgeführt sein.

Die Überwachungseinheit 1 und die Maschinensteuerung 16 stehen mit den Sensoren 15, den Drosselventilen 8 sowie einer Leistungselektronik eines Pumpenmotors der Versorgungspumpe 11 sowie optional weiteren hydraulischen Elementen oder Baueinheiten der Versorgungseinheit in Signalverbindung.

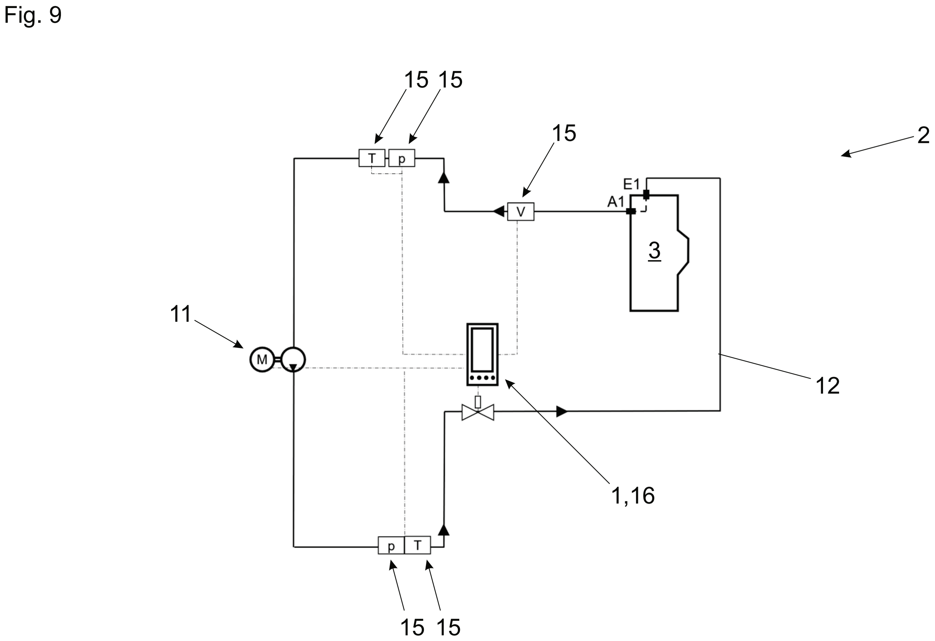

Wird von der Überwachungseinheit 1 das Ausgabesignal erzeugt, was anzeigt, dass der Minimaldruck in einem der Temperierkreise 12 niedriger als der Dampfdruck des Temperiermediums - gegebenenfalls niedriger als der Dampfdruck des Temperiermediums zuzüglich eines Offsets - ist, können verschiedene Aktionen eingeleitet werden. Beispiele hierfür werden in den Fig. 9a bis 13b beschrieben.

Je nach Situation werden die Versorgungseinheit mit der Versorgungspumpe 11, sowie gegebenenfalls der Vorlauf und/oder der Rücklauf als Teil des Temperiersystems 2 aufgefasst oder nicht. Wenn Daten aus der Versorgungseinheit vorliegen, wie beispielsweise eine Förderleistung, die optional auch beeinflusst werden kann, oder Messwerte eines Drucksensors 15 in der Nähe der Versorgungseinheit, kann diese als Teil des Temperiersystems 2 aufgefasst werden.

In vielen Fällen in der Praxis ist das aber nicht der Fall. Das Versorgungssystem stellt sich dann als Black Box dar, die einen gewissen vorlaufseitigen Systemdruck liefert, der konstant oder variabel sein kann. In diesen Fällen wird das Versorgungssystem nicht als Teil des Temperiersystems 2 aufgefasst, weil keinerlei Information oder Kontrolle über das Verhalten des Versorgungssystems, der Versorgungseinheit oder der Versorgungspumpe 11 vorhanden ist.

Die Ausführung nach Fig. 2 unterscheidet sich von jener gemäß Fig. 1 dadurch, dass in den Temperierkreisen 12 keine Drücke gemessen werden. Lediglich im Vorlauf und im Rücklauf sind Sensoren 15 zum Messen des jeweils anliegenden Drucks vorgesehen.

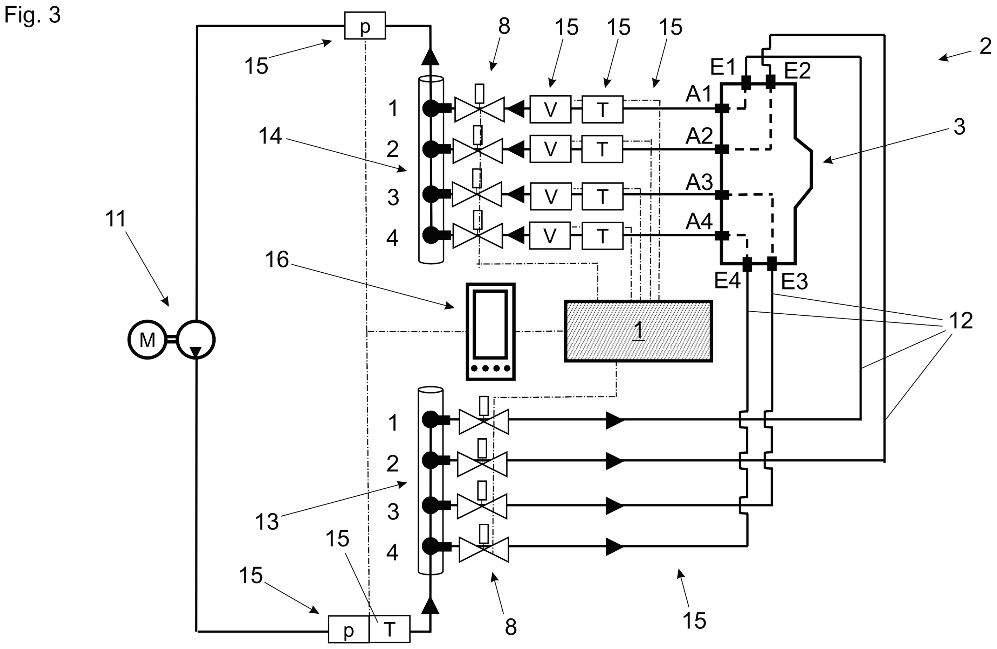

Die Ausführung nach Fig. 3 unterscheidet sich von jener aus Fig. 2 dadurch, dass keinerlei Informationen über oder Einflussmöglichkeit auf die Versorgungseinheit oder die Versorgungspumpe 11 vorhanden sind. Zum aktiven Vermeiden des Verschleißmechanismus sind daher nur die Drosselventile 8 vorhanden, wobei ein manuelles Eingreifen eines Bedieners auf die Versorgungseinheit oder die Versorgungspumpe 11 oder andere Teile des Versorgungssystems natürlich trotzdem möglich bleibt.

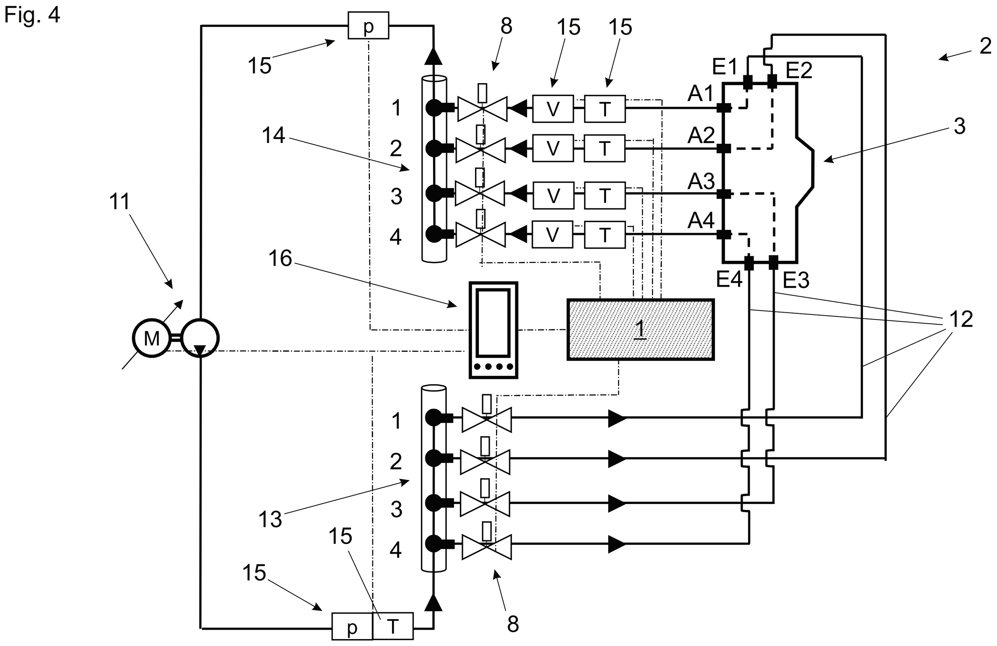

Die Ausführung gemäß Fig. 4 unterscheidet sich von jener gemäß Fig. 2 dadurch, dass die Drehzahl des die Versorgungspumpe 11 antreibenden Pumpenmotors beeinflussbar, insbesondere einstellbar, ist, was durch einen Pfeil angedeutet ist. Beispielsweise kann auf diese Weise ein Ansteuersignal an den Pumpenmotor ausgegeben werden, der zu einem Anheben des Systemdrucks im Temperiersystem 2 führt.

Alternativ oder zusätzlich zum Beeinflussen des Pumpenmotors könnte auch die Pumpe selbst eine Verstellpumpe sein, deren Hub im laufenden Betrieb beeinflusst, insbesondere eingestellt, werden kann.

Ebenso kann der Systemdruck angehoben werden, indem die interne Druckregelung der Versorgungseinheit beeinflusst wird, ohne die Förderleistung oder die Drehzahl der Pumpe zu verändern (Offset des Druckniveaus). Temperiergeräte bieten häufig die Möglichkeit, einen definierten Systemdruck bzw. Minimaldruck vorzugeben und regeln diesen oder halten diesen aufrecht.

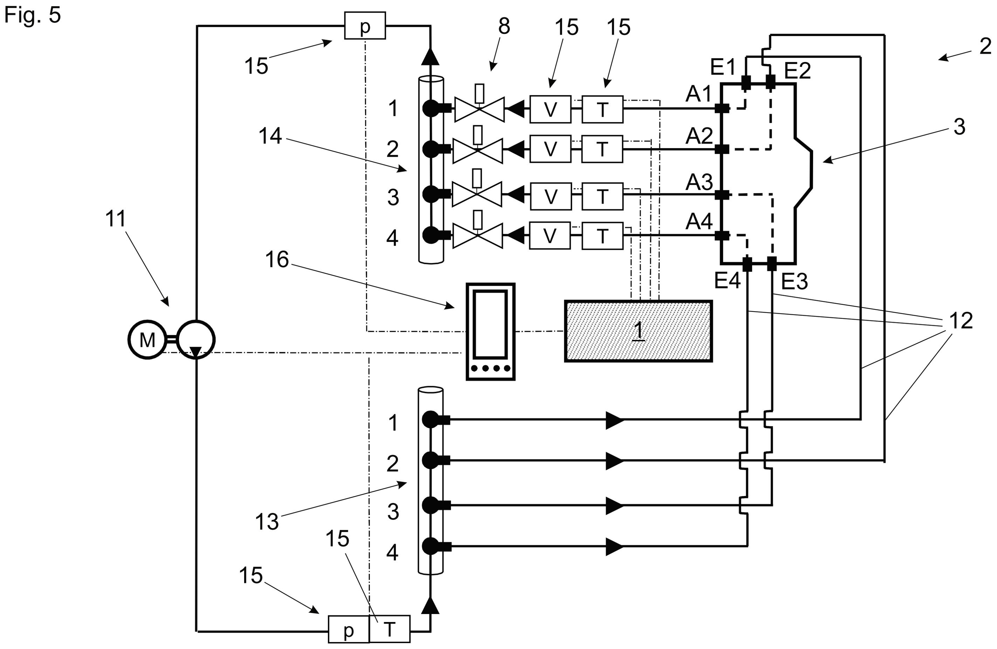

Die Ausführung gemäß Fig. 5 unterscheidet sich von jener gemäß Fig. 2 dadurch, dass nur rücklaufseitig Drosselventile 8 vorhanden sind, das heißt, in jedem Temperierkreis befindet sich nur noch ein Drosselventil 8. Die Drosselventile 8 sind hier beispielhaft ohne Datenverbindung zur Überwachungseinheit 1 dargestellt.

Ohne Kenntnis der Öffnungsgrade ist eine genaue Bestimmung des Druckabfalls schwierig. In diesem Fall kann beispielsweise ein "worst case" Wert oder ein Mittelwert für den zu erwarteten Druckabfall verwendet werden.

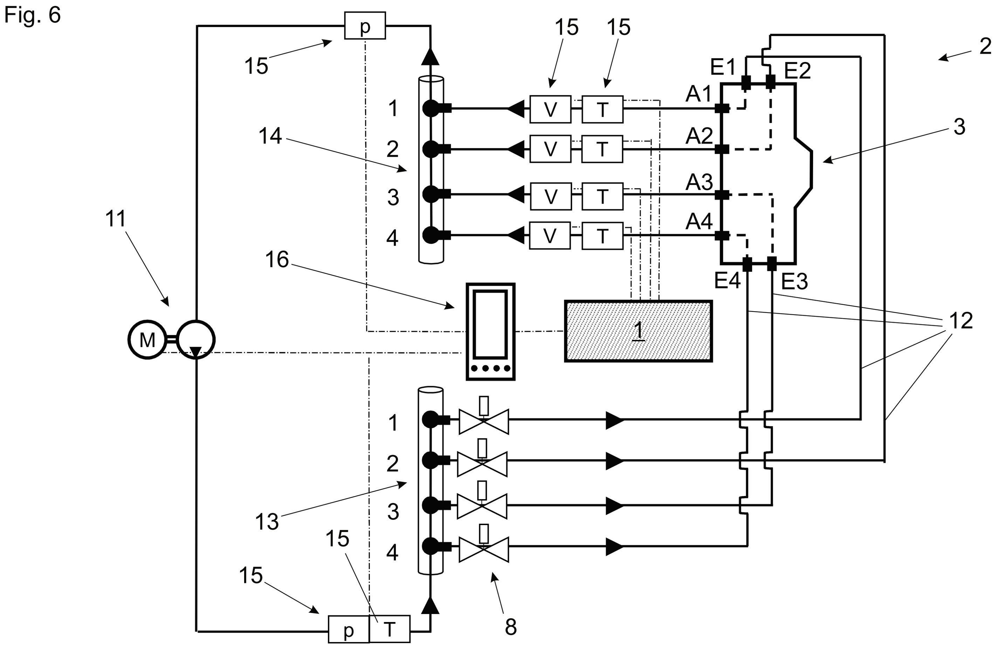

Die Ausführung nach Fig. 6 unterscheidet sich von jener gemäß Fig. 5 dadurch, dass die Drosselventile 8 vorlaufseitig angeordnet sind. Zu erwähnen ist, dass Mischformen ebenso denkbar sind, wobei die Drosselventile 8 je Temperierkreis teilweise vorlaufseitig und teilweise rücklaufseitig angeordnet sind.

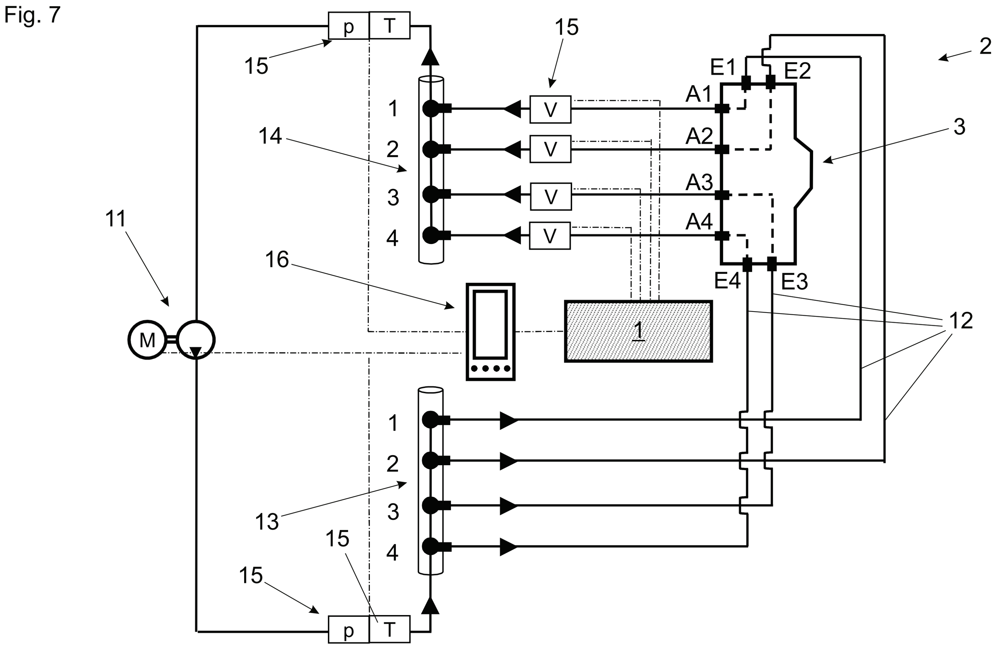

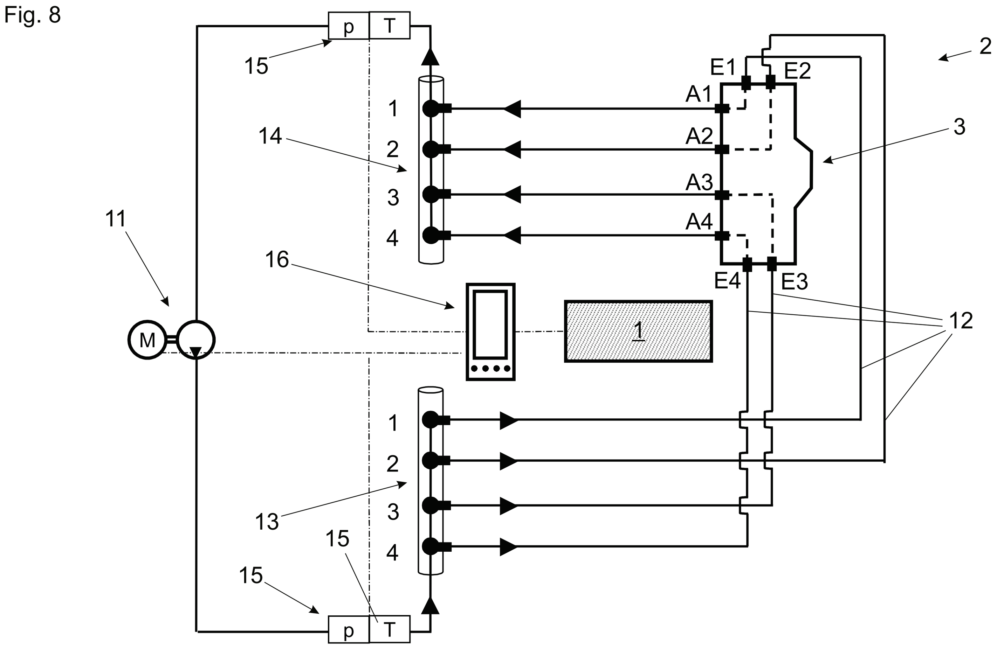

Gemäß Fig. 7 oder Fig. 8 sind auch Ausführungsformen denkbar, wobei keine betätigbaren Drosselventile 8 (und in Fig. 8 auch keine Volumenstromsensoren 15) vorgesehen sind, sodass sich die Volumenströme in den Temperierkreisen 12 rein durch die vorhandenen hydraulischen Widerstände in den Temperierkreisen 12 einstellen. Gerade bei Formteilen, wobei das Augenmerk auf einer günstigen, effektiven und mit Minimalaufwand realisierbaren Fertigung liegt, werden solche Ausführungen in der Praxis durchaus eingesetzt.

Zu beachten ist, dass die Drosselventile 8 handbetriebene Ventile sein können, deren Öffnungsgrade entweder signaltechnisch erfasst werden oder nicht. Bevorzugt sind es aber Drosselventile 8, deren Öffnungsgrade signaltechnisch erfassbar sind und die außerdem von der Maschinensteuerung 16 und/oder der Überwachungseinheit 1 aktiv gesteuert oder geregelt werden können.

Ist keine Erfassung des Öffnungsgrades vorgesehen, kann vereinfacht auch der Ansteuerwert für den Öffnungsgrad (Sollwert) als vorhandener Öffnungsgrad (Istwert) angenommen werden.

Fig. 9 zeigt eine Ausführungsform eines Temperiersystems 2 mit einem einzigen Temperierkreis 12.

In diesem Beispiel ist die Überwachungseinheit 1 in die Maschinensteuerung 16 integriert.

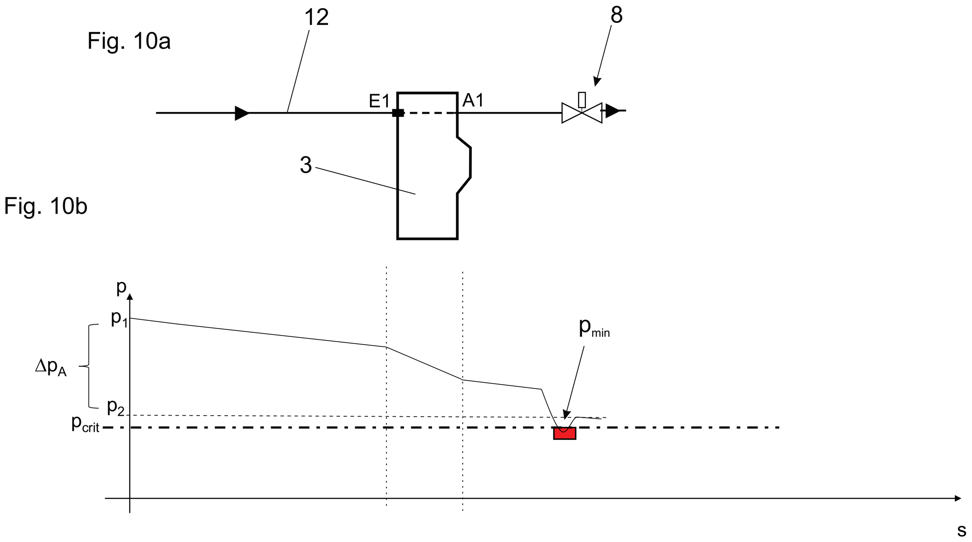

Mit Fig. 10a und 10b wird ein Ausführungsbeispiel der Funktionsweise einer Überwachungseinheit 1, eines Temperiersystems 2, eines Überwachungsverfahrens und eines Computerprogrammprodukts der vorliegenden Offenbarung beschrieben.

Schematisch ist in Fig. 10a der zu betrachtende Bereich des Temperiersystems 2 dargestellt, nämlich als Beispiel ein Temperierkreis 12, welcher durch ein Formwerkzeug 3 führt und in welchem ein Drosselventil 8 vorhanden ist.

Der Rest des Temperiersystems 2 kann beispielsweise wie in einer der Fig. 1 bis 9 ausgebildet sein.

Fig. 10b zeigt beispielhaft den Druck im Temperierkreis 12 entlang der Wegstrecke s des Temperierkreises 12. Der anfängliche Systemdruck $p_1$ fällt entlang des Temperierkreises 12 langsam ab. Innerhalb des Formwerkzeugs 3, angedeutet durch den Bereich zwischen den zwei gestrichelten vertikalen Linien, ist gemeinhin der hydraulische Widerstand des Temperierkreises 12 etwas höher, weshalb der Druck in diese Bereich etwas schneller abfällt.

Zum Ende des Temperierkreises 12 hin ist das rücklaufseitige Drosselventil 8 angeordnet, dass für einen relativ starken lokalen Druckabfall sorgt.

Ist zum Beispiel im Rücklauf ein Drucksensor 5 angeordnet, kann damit der Druck $p_2$ gemessen werden.

In diesem Ausführungsbeispiel wird ein in einem Speicher 7 hinterlegter Zusammenhang verwendet, welchem ausgehend vom Druck $p_2$ ein Druck innerhalb des Drosselventils 8 entnommen werden kann. Ein solcher Zusammenhang kann beispielsweise durch vorherige Messungen oder durch Angaben des Herstellers des Drosselventils 8 erstellt und im Speicher hinterlegt werden.

Darüber hinaus kann im Vorlauf oder Rücklauf ein Temperatursensor 5 vorhanden sein, sodass die Temperatur des Temperiermediums gemessen werden kann, wobei das Temperiermedium in diesem Ausführungsbeispiel Wasser ist.

Der Dampfdruck $p_{crit}$ von Wasser bei einer bekannten Temperatur ist einschlägigem Tabellenwerk zu entnehmen, könnte aber natürlich auch vorab separat gemessen werden. Auf ähnliche Weise kann der Dampfdruck $p_{crit}$ auch für andere Arten von Temperiermedien und Mischungen bestimmt werden.

Insgesamt sind daher sowohl der Dampfdruck $p_{crit}$ als auch der Minimaldruck im in Fig. 10a angedeuteten Temperierkreis 12 bekannt, wobei letztere in Fig. 10b durch eine kleine Box (rot) lokalisiert ist.

Der Vergleich des Dampfdrucks $p_{crit}$ mit dem Minimaldruck zeigt, dass der Minimaldruck lokal niedriger als der Dampfdruck $p_{crit}$ ist.

Mit dem eingangs beschriebene Verschleißmechanismus muss daher gerechnet werden und die Überwachungseinheit 1 erzeugt das Ausgabesignal und/oder gemäß dem Überwachungsverfahren kann eine Aktion eingeleitet werden.

Beispiele für Maßnahmen, welche auf dieser Basis gesetzt werden können, sind in Verbindung mit den nächsten Figuren beschrieben. Im einfachsten Fall könnte aber, wie erwähnt, auch einfach ein Bediener einen Warnhinweis erhalten und so darauf aufmerksam gemacht werden, dass bei den vorliegenden Einstellungen des Temperiersystems mit erhöhtem Verschleiß zu rechnen ist.

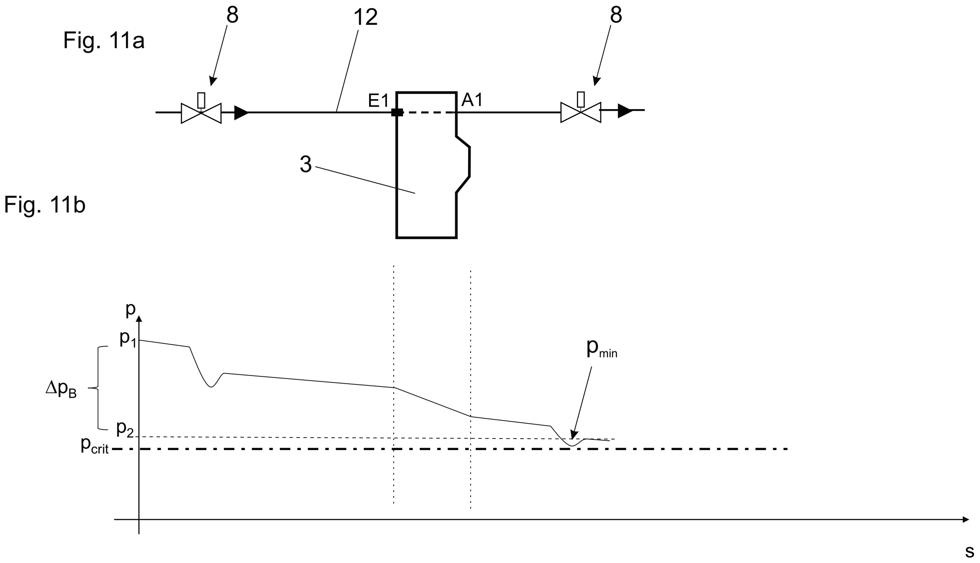

Fig. 11a und 11b zeigen eine erste Maßnahme, wobei im Vergleich zu den Figuren 10a und 10b ein zusätzliches vorlaufseitiges Drosselventil 8 vorhanden ist. Das zusätzliche vorlaufseitige Drosselventil 8 kann in der Ausführung nach Fig. 10a beispielsweise schon vorhanden sein und mit einem Öffnungsgrad von 100 % betrieben werden, sodass es auf die Kurve in Fig. 10b keinen oder nur geringen Einfluss hat. Alternativ kann das zusätzliche vorlaufseitige Drosselventil 8 bei Erkennen des potenziell erhöhten Verschleißes auch neu in den Temperierkreis 12 eingefügt werden.

Beispielsweise mittels eines Ausgabesignals beinhaltend ein erstes Ansteuersubsignal für das vorlaufseitiges Drosselventil 8 zum Verringern des Öffnungsgrads und ein zweites Ansteuersubsignal für das rücklaufseitige Drosselventil 8 zum Erhöhen des Öffnungsgrads kann dann sichergestellt werden, dass die Öffnungsgrade der Drosselventile 8 so eingestellt werden, dass der Minimaldruck im Temperierkreis 12 nicht mehr unter den Dampfdruck $p_{crit}$ sinkt.

Außerdem kann dies so geschehen, siehe Fig. 11b, dass der gleiche gesamte Druckabfall $Dp_B$ vorliegt, wie dies vorher in Fig. 10b der Fall war ($Dp_A$), sodass $Dp_A = Dp_B$ gilt.

Es kann also sichergestellt werden, dass erhöhter Verschleiß vermieden wird, aber kein Einfluss auf die Temperierung entsteht, weil sich der Druckabfall und damit der Volumenstrom sowie die mit dem Temperiermedium ausgetauschte Wärme nicht ändert.

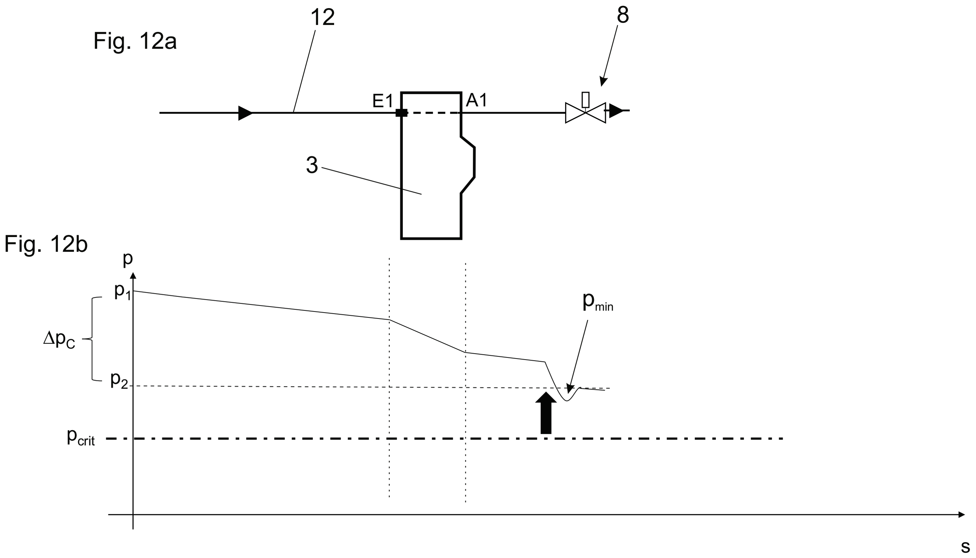

In einem anderen Ausführungsbeispiel gemäß Fig. 12a und 12b kann alternativ oder zusätzlich zum vorlaufseitigen Drosselventil 8 ein Ansteuersignal für die Versorgungspumpe 11 ausgegeben werden, um den Systemdruck $p_1$ zu erhöhen. Wie aus Fig. 12b ersichtlich ist, kann auch auf diese Weise vermieden werden, dass der Minimaldruck unter den Dampfdruck $p_{crit}$ fällt.

Das Erhöhen des Systemdrucks $p_1$ kann beispielsweise durch eine erhöhte Pumpendrehzahl und/oder einen erhöhten Pumpenhub erfolgen.

Alternativ oder zusätzlich kann die interne Druckregelung der Versorgungseinheit beeinflusst werden, sodass der minimale Systemdruck erhöht wird.

Auch in diesem Ausführungsbeispiel entsteht kein Einfluss auf die Temperierung, weil der Druckabfall auch hier gleichbleibt: $Dp_C = Dp_A$.

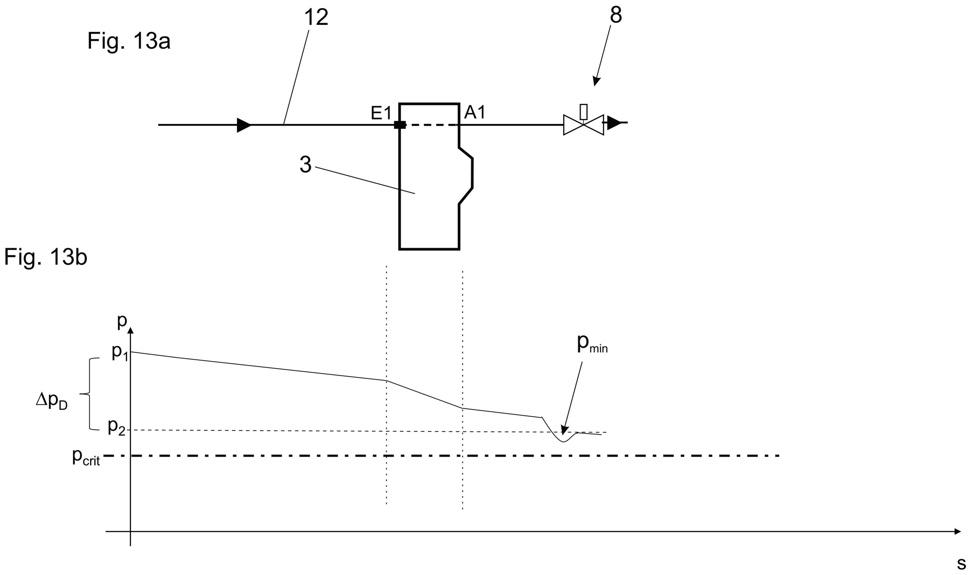

Fig. 13a und 13b zeigen ein Ausführungsbeispiel, wobei weder auf ein zusätzliches Drosselventil 8 noch auf eine Versorgungseinheit oder eine Versorgungspumpe 11 Einfluss genommen werden muss.

Es ist in diesem Beispiel vorgesehen, beispielsweise in Form eines Ansteuersignals, einen Mindestöffnungsgrad für das Drosselventil 8 vorzugeben. Wie Fig. 13b zu entnehmen ist, wird auch hier der Dampfruck $p_{crit}$ nicht unterschritten.

Bevorzugt kann beim Erhöhen des Systemdrucks $p_1$ auch ein maximal möglicher oder zulässiger Systemdruck des Versorgungssystems und des Temperiersystems 2 berücksichtigt werden. Beispielsweise könnte eine Erhöhung des Systemdrucks und/oder Erhöhung der Förderleistung unzulässig sein, wenn verwendete Schläuche nicht für diesen Druckbereich ausgelegt wurden.

Zu erwähnen ist, dass in diesem Ausführungsbeispiel ein Einfluss auf die Temperierung entsteht, weil sich der Druckabfall $Dp_D$ verändern wird ($Dp_D < Dp_A$). Wie Fig. 13b aber entnommen werden kann, ist der Einfluss auf den Druckabfall aber in der Regel relativ klein und daher oft akzeptabel.

Ein vorteilhafter Effekt der vorliegenden Offenbarung kann aber auch in Verbindung mit Temperiersystemen gemäß den Fig. 7 und 8 erzielt werden. Beispielsweise kann es sein, dass der Verschleißmechanismus auch an anderen hydraulischen Elementen eines Temperierkreises 12 auftritt. Beispielsweise am Eingang (E1 bis E4) in das Formwerkzeug 3, an sogenannten Fingerkühlungen mit kleinen Strömungsquerschnitten oder an Biegungen des Temperierkreises 12 innerhalb des Formwerkzeugs 3 kann der Druck zu stark abfallen.

Beispielsweise durch Messungen am Formwerkzeug 3 vor der Inbetriebnahme oder durch Simulationen kann herausgefunden werden, bei welchen Drücken mit dem Verschleißmechanismus zu rechnen ist. Auf diese Weise kann auch bei Ausführungen gemäß Fig. 7 und 8 der Minimaldruck bestimmt und mit dem Dampfdruck $p_{crit}$ verglichen werden.

Die Strategien, die in Verbindung mit den Figuren 10a, 10b, 11a, 11b, 12a, 12b, 13a, 13b beschrieben wurden, können auch miteinander kombiniert werden.

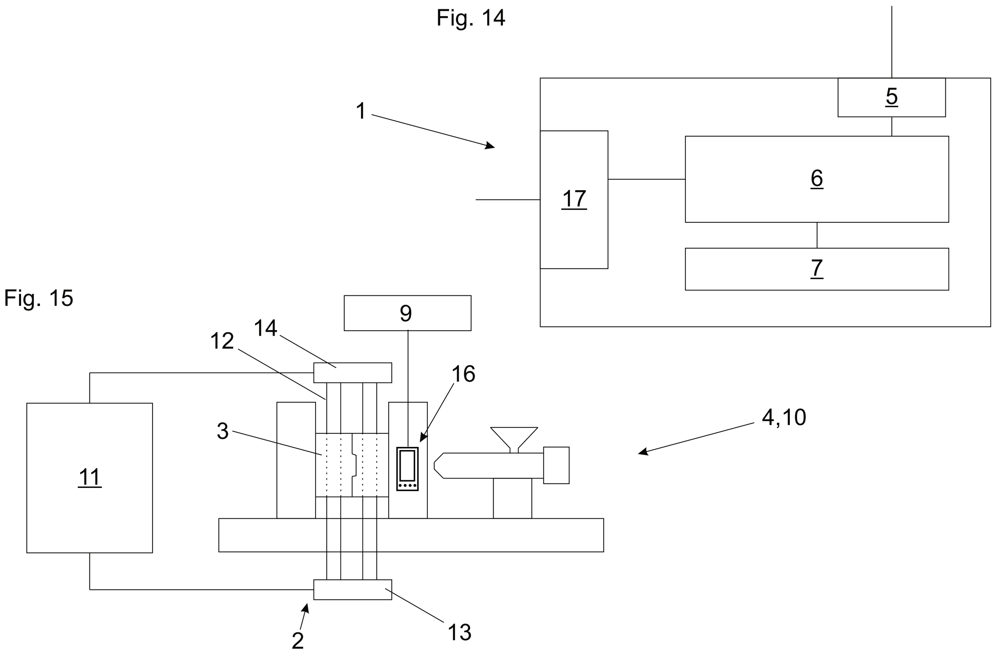

Fig. 14 zeigt schematisch einen Aufbau der Überwachungseinheit 1. Sie beinhaltet in bevorzugten Ausführungsbeispielen:

- Eingabemodul 5 zum Entgegennehmen von Eingaben von Messwerten und anderen Eingaben, beispielsweise betreffend die Zusammensetzung des Temperiermediums
- Prozessor 6 zum Berechnen des Dampfdrucks $p_{crit}$ und des Minimaldrucks, zum Vergleichen derselben und zum Generieren des Ausgabesignals
- Speicher 7, in welchem der Druckabfall eines hydraulischen Elements, bevorzugt eines Drosselventils 8, hinterlegt ist
- Ausgabemodul 17 zum Ausgeben des Ausgabesignals und gegebenenfalls des Datenträgersignals

Zu erwähnen ist, dass sämtliche Elemente der Überwachungseinheit in physischer Form vorliegen können oder als Softwaremodule oder Zugriff auf Online-Dienste für Berechnungen und Speicher realisiert sein können.

Fig. 15 zeigt schematisch eine Formgebungsanlage 10 mit einer Formgebungsmaschine 4, hier eine Spritzgießmaschine, einem Temperiersystem 2, einem an der Formgebungsmaschine 4 montierten Formwerkzeug 3 und einer Versorgungseinheit mit Versorgungspumpe 11.

Die Formgebungsmaschine 4 besitzt in an sich bekannter Weise eine Formschließeinheit, eine Einspritzeinheit sowie eine Maschinensteuerung 16.

Wie bereits erwähnt, wird das Versorgungssystem mit der oder in Form der Versorgungseinheit und/oder mit der Versorgungspumpe 11 je nach Ausführung als Teil des Temperiersystems 2 oder nicht aufgefasst.

In diesem Ausführungsbeispiel ist die Überwachungseinheit 1 in die Maschinensteuerung 16 der Formgebungsmaschine 4 integriert.

Zusätzlich ist die Überwachungseinheit 1 mit einem übergeordneten Überwachungssystem 9 datenverbunden. Das übergeordnete Überwachungssystem 9 kann beispielsweise ein MES (englisch "manufacturing execution system") sein. Alternativ oder zusätzlich kann es sich beim übergeordneten Überwachungssystem 9 um ein Internet-gestütztes Überwachungssystem 9 sein, das für bevorzugt mehrere Formgebungsanlage 10 erlaubt, verschiedene Überwachungsmetriken dynamisch zu ermitteln und zu prüfen. Dadurch können die ermittelten Informationen auch an einer zentrale Leit- oder Überwachungsstelle, örtlich abseits der Maschine, für die weitere Verarbeitung zur Verfügung gestellt werden.

Fig. 16 zeigt schematisch die Druckverhältnisse im minimalen Strömungsquerschnitt eines Drosselventils 8 in Abhängigkeit des Ventilöffnungsgrades x.

Das Betriebsdruckverhältnis 18 ist gegeben durch

$$BV = (p1-p2)/(p1 - p_{min}),$$

wobei p1 der Druck am Eingang des Drosselventils 8, p2 der Druck am Ausgang des Drosselventils 8 und $p_{min}$ der niedrigste Druck innerhalb des Drosselventils 8 ist.

Das kritische Betriebsdruckverhältnis 19 ist gegeben durch

$$kBV = (p1-p2)/(p1 - p_{crit})$$

mit denselben Formelzeichen, wobei $p_{crit}$ der Dampfdruck des Temperiermediums ist.

Der eingangs beschriebene Verschleißmechanismus ist dann zu erwarten, wenn das Betriebsdruckverhältnis 18 unter das kritische Betriebsdruckverhältnis 19 fällt.

Um Unsicherheiten in der Berechnung oder den Messwerten Rechnung zu tragen kann das Ausgabesignal gemäß der vorliegenden Offenbarung bereits erzeugt werden, wenn der Minimaldruck unter den Dampfdruck plus einem definierten Offset fällt und/oder nahe am Dampfdruck liegt.

Wie aus Fig. 16 ersichtlich ist, gibt es bei jenen Drosselventilen 8, die durch das in Fig. 16 dargestellte Betriebsdruckverhältnis 18 beschrieben werden, einen Bereich mittlerer Öffnungsgrade x, wobei die Gefahr am größten ist, dass der Verschleißmechanismus auftritt.

Anders als ursprünglich - und soweit ersichtlich im Stand der Technik - gedacht, tritt der Verschleißmechanismus also nicht nur bei geringen Ventilöffnungsgraden x sondern je nach Ventil in einem spezifischen Bereich der Ventilöffnungsgrade x auf.

Mittels der hier vorgestellten Überwachung kann der Verschleißmechanismus je nach Ausführung erkannt, unterdrückt oder vollständig unterbunden werden.

Bezugszeichenliste:

1   Überwachungseinheit
2   Temperiersystem
3   Formwerkzeug
4   Formgebungsmaschine
5   Eingabemodul
6   Prozessor

7     Speicher
8     Drosselventil
9     Überwachungssystem
10    Formgebungsanlage
11    Versorgungspumpe
12    Temperierkreis
13    Temperiermedienverteiler
14    Temperiermediensammler
15    Sensor
16    Maschinensteuerung
17    Ausgabemodul
18    Betriebsdruckverhältnis
19    kritisches Betriebsdruckverhältnis

**Patentansprüche**

1. Überwachungseinheit für ein Temperiersystem (2) für ein Formwerkzeug (3) und/oder eine Formgebungsmaschine (4), wobei die Überwachungseinheit (1) ein Eingabemodul (5) sowie einen Prozessor (6) beinhaltet und wobei das Eingabemodul (5) dazu ausgebildet ist,

   - eine erste Eingabe entgegenzunehmen, welche für eine thermodynamische Größe, insbesondere eine Temperatur, und/oder eine Zusammensetzung eines Temperiermediums steht, und
   - eine zweite Eingabe entgegenzunehmen, welche für einen Druck des Temperiermediums steht,

   **dadurch gekennzeichnet, dass** der Prozessor (6) dazu ausgebildet ist,

   - aus der für die thermodynamische Größe und und/oder die Zusammensetzung des Temperiermediums stehenden ersten Eingabe einen Dampfdruck des Temperiermediums zu berechnen,
   - aus der für den Druck stehenden zweiten Eingabe einen Minimaldruck des Temperiermediums in einem zu betrachtenden Bereich des Temperiersystems (2) zu berechnen oder die für den Druck stehende zweite Eingabe als Minimaldruck im zu betrachtenden Bereich zu verwenden sowie
   - den Minimaldruck mit dem Dampfdruck zu vergleichen und ein Ausgabesignal zu erzeugen, falls der Minimaldruck niedriger als der Dampfdruck und/oder niedriger als der Dampfdruck plus einem definierten Offset ist.

2. Überwachungseinheit nach Anspruch 1, wobei das Eingabemodul (5) dazu ausgebildet ist, die erste Eingabe in Form eines das Temperiermedium betreffenden Temperaturmesssignals entgegenzunehmen.

3. Überwachungseinheit nach einem der vorhergehenden Ansprüche, wobei das Eingabemodul (5) dazu ausgebildet ist, die erste Eingabe in Form einer Benutzereingabe betreffend die thermodynamische Größe und/oder die Zusammensetzung des Temperiermediums entgegenzunehmen.

4. Überwachungseinheit nach einem der vorhergehenden Ansprüche, wobei in einem Speicher (7) der Überwachungseinheit (1) ein Druckabfall eines hydraulischen Elements, insbesondere eines Drosselventils (8), hinterlegt ist, wobei der Prozessor (6) dazu ausgebildet ist, den Minimaldruck im zu betrachtenden Bereich des Temperiersystems (2) aus der für den Druck des Temperiermediums stehenden zweiten Eingabe und dem Druckabfall zu berechnen.

5. Überwachungseinheit nach Anspruch 4, wobei der Druckabfall in Form eines Zusammenhangs im Speicher (7) hinterlegt ist, wobei der Zusammenhang den Druckabfall je nach Öffnungsgrad des Drosselventils (8) und optional je nach dem anliegenden Druck und/oder einer Druckdifferenz und/oder eines Volumenstroms ausgibt.

6. Überwachungseinheit nach einem der vorhergehenden Ansprüche, wobei das Ausgabesignal zumindest eines der folgenden beinhaltet:

   - Warnhinweis für einen Bediener oder ein übergeordnetes Überwachungssystem (9)
   - Ansteuersignal für ein Drosselventil (8), bevorzugt in Form eines Ansteuersignals zum Verändern, bevorzugt Erhöhen, des Öffnungsgrads des Drosselventils (8) und/oder in Form eines Grenzöffnungsgrads, bevorzugt eines Mindestöffnungsgrads, des Drosselventils (8)
   - Ansteuersignal für eine eine Versorgungspumpe aufweisende Versorgungseinheit zum Verändern, einer Förderleistung und/oder zum Verändern, bevorzugt Erhöhen, eines Systemdrucks oder Rücklaufdrucks.

7. Überwachungseinheit nach Anspruch 6, wobei das Ausgabesignal ein erstes Ansteuersubsignal für ein vorlaufseitiges Drosselventil (8) zum Verringern des Öffnungsgrads und ein zweites Ansteuersubsignal für ein rücklaufseitiges Drosselventil (8) zum Verändern, bevorzugt Erhöhen, des Öffnungsgrads beinhaltet.

8. Temperiersystem mit einem Temperierkreis (12) oder mehreren Temperierkreisen (12) sowie einer Überwachungseinheit (1) nach einem der vorhergehenden Ansprüche.

9. Temperiersystem nach Anspruch 8, wobei zur Realisierung von mehreren Temperierkreisen (12) ein vorlaufseitiger Temperiermedienverteiler (13) und-/oder ein rücklaufseitiger Temperiermediensammler (14) vorgesehen ist.

10. Temperiersystem nach Anspruch 8 oder 9, wobei je Temperierkreis (12) ein Drosselventil (8) vorgesehen ist, bevorzugt ein vorlaufseitiges Drosselventil (8) und/oder ein rücklaufseitiges Drosselventil (8).

11. Temperiersystem nach einem der Ansprüche 8 bis 10, wobei ein Sensor (15) oder mehrere Sensoren (15) vorgesehen sind, welche(r) zum Messen zumindest einer der folgenden Größen ausgebildet sind(ist):

    - Druck, bevorzugt vorlaufseitig zentral und/oder vorlaufseitig individuell für den jeweiligen Temperierkreis (12) und/oder rücklaufseitig individuell für den jeweiligen Temperierkreis (12) und-/oder rücklaufseitig zentral
    - Temperatur, bevorzugt vorlaufseitig zentral und-/oder rücklaufseitig zentral und/oder individuell für den jeweiligen Temperierkreis (12), bevorzugt stromabwärts des Formgebungswerkzeugs individuell für den jeweiligen Temperierkreis
    - Volumenstrom, bevorzugt rücklaufseitig individuell für den jeweiligen Temperierkreis (12)

12. Formgebungsanlage mit einer Formgebungsmaschine (4) und/oder einem Formwerkzeug (3) sowie einem Temperiersystem (2) nach einem der Ansprüche 8 bis 11, wobei die Überwachungseinheit (1) bevorzugt in eine Maschinensteuerung (16) der Formgebungsmaschine (4) integriert ist.

13. Überwachungsverfahren zum Überwachen eines Temperiersystems (2) für ein Formwerkzeug (3) und-/oder eine Formgebungsmaschine (4), wobei folgende Schritte durchgeführt werden:

    - Bereitstellen einer thermodynamischen Größe, insbesondere einer Temperatur, und/oder einer Zusammensetzung eines Temperiermediums,
    - Bereitstellen eines Drucks des Temperiermediums,
    - Berechnen eines Dampfdrucks des Temperiermediums aus der thermodynamischen Größe und/oder der Zusammensetzung des Temperiermediums,
    - Berechnen eines Minimaldrucks des Temperiermediums in einem zu betrachtenden Bereich des Temperiersystems (2) aus dem Druck des Temperiermediums oder Verwenden des Drucks des Temperiermediums als Minimaldruck im zu betrachtenden Bereich sowie

- Vergleichen des Minimaldrucks mit dem Dampfdruck und Einleiten einer Aktion, falls der Minimaldruck niedriger als der Dampfdruck und/oder niedriger als der Dampfdruck plus einem definierten Offset ist.

14. Verwendung einer Überwachungseinheit (1) nach einem der Ansprüche 1 bis 7 oder eines Temperiersystems (2) nach einem der Ansprüche 8 bis 11 oder einer Formgebungsanlage (10) nach Anspruch 12 bei einem Überwachungsverfahren nach Anspruch 13.

15. Computerprogrammprodukt zum Überwachen eines Temperiersystems (2) beinhaltend Befehle, welche einen ausführenden Computer zum Durchführen der folgenden Schritte veranlassen:

    - Entgegennehmen einer ersten Eingabe, welche für eine thermodynamische Größe, insbesondere eine Temperatur, und/oder eine Zusammensetzung eines Temperiermediums steht,
    - Entgegennehmen einer zweiten Eingabe, welche für einen Druck des Temperiermediums steht,
    - Berechnen eines Dampfdrucks aus der für die thermodynamische Größe und und/oder die Zusammensetzung des Temperiermediums stehenden ersten Eingabe,
    - Berechnen eines Minimaldrucks des Temperiermediums in einem zu betrachtenden Bereich des Temperiersystems (2) aus der für den Druck stehenden zweiten Eingabe oder Verwenden des Drucks als Minimaldruck im zu betrachtenden Bereich sowie
    - Vergleichen des Minimaldrucks mit dem Dampfdruck und Erzeugen eines Ausgabesignals, falls der Minimaldruck niedriger als der Dampfdruck und/oder niedriger als der Dampfdruck plus einem definierten Offset ist.

16. Transitorischer oder nicht-transitorischer Datenträger mit einem Computerprogrammprodukt nach Anspruch 15.

17. Datenträgersignal mit einem Ausgabesignal,

    - das von einer Überwachungseinheit (1) nach einem der Ansprüche 1 bis 7 und/oder einem Temperiersystem (2) nach einem der Ansprüche 8 bis 11 und/oder einer Formgebungsanlage (10) nach Anspruch 12 erzeugt wurde und-/oder
    - das als durch ein Überwachungsverfahren nach Anspruch 13 als ausgelöste Aktion ausgegeben wurde und/oder
    - das durch Ausführen eines Computerprogrammprodukts gemäß Anspruch 15 generiert wurde.

Fig. 1

Fig. 2

Fig. 3

EP 4 768 222 A1

Fig. 4

EP 4 768 222 A1

Fig. 5

Fig. 6

Fig. 7

EP 4 768 222 A1

Fig. 8

Fig. 9

Fig. 10a

Fig. 10b

EP 4 768 222 A1

Fig. 11a

8

12

8

E1    A1

3

Fig. 11b

EP 4 768 222 A1

24

$p$

$p_1$

$\Delta p_B$

$p_{min}$

$p_2$

$p_{crit}$

$s$

EP 4 768 222 A1

Fig. 12a

12

8

E1    A1

3

Fig. 12b

p

$p_1$

$\Delta p_C$

$p_{min}$

$p_2$

$p_{crit}$

s

Fig. 13a

Fig. 13b

Fig. 14

Fig. 15

Fig. 16

Europäisches Patentamt
European Patent Office
Office européen des brevets

# EUROPÄISCHER RECHERCHENBERICHT

Nummer der Anmeldung

EP 25 20 9082

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y<br><br>A | JP 2017 087441 A (MATSUI MFG CO) 25. Mai 2017 (2017-05-25)<br>* Zusammenfassung; Ansprüche 1,2; Abbildungen 1-5 *<br>* Absätze [0001] - [0004] *<br>* Absätze [0008], [0010] *<br>* Absätze [0011] - [0016] *<br>* Absatz [0029] *<br>* Absätze [0031], [0032] *<br>* Absätze [0037] - [0047] *<br>* das ganze Dokument *<br>----- | 1-3,6, 8-16<br>4,5, 15-17<br>7 | INV.<br>B29C45/73<br>B29C35/00<br>B29C45/78<br>B29C45/84<br>G05D16/00<br>G05D16/20 |
| X<br>Y<br>A | DE 10 2008 027039 A1 (AIR REGLOPLAS GMBH [DE]) 10. Dezember 2009 (2009-12-10)<br>* Absätze [0015], [0016] *<br>* Absätze [0026] - [0037] *<br>* Absätze [0044], [0045]; Ansprüche 9, 21 *<br>* Ansprüche 1-21; Abbildungen 1-3 *<br>----- | 1-3,6, 8-16<br>4,5, 15-17<br>7 | |
| Y<br><br>A | DE 10 2024 102390 A1 (ENGEL AUSTRIA GMBH [AT]) 14. August 2024 (2024-08-14)<br>* Absätze [0001], [0012], [0017], [0147] - [0150]; Ansprüche 35-38 *<br>* Absätze [0117], [0145], [0146], [0165], [0108], [0213] *<br>* Absätze [0160] - [0165] *<br>* Absätze [0178] - [0186], [0199], [0212], [0215] *<br>* Ansprüche 1-39; Abbildungen 1-12 *<br>* das ganze Dokument *<br>----- | 4,5, 15-17<br>7 | RECHERCHIERTE SACHGEBIETE (IPC)<br><br>B29C<br>G05D |

Der vorliegende Recherchenbericht wurde für alle Patentansprüche erstellt

| Recherchenort | Abschlußdatum der Recherche | Prüfer |
|---|---|---|
| München | 19. Mai 2026 | Brunswick, André |

## ANHANG ZUM EUROPÄISCHEN RECHERCHENBERICHT
## ÜBER DIE EUROPÄISCHE PATENTANMELDUNG NR.

EP 25 20 9082

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-05-2026

| Im Recherchenbericht angeführtes Patentdokument | Datum der Veröffentlichung | Mitglied(er) der Patentfamilie | Datum der Veröffentlichung |
|---|---|---|---|
| JP 2017087441 A | 25-05-2017 | JP 6619990 B2<br>JP 2017087441 A | 11-12-2019<br>25-05-2017 |
| DE 102008027039 A1 | 10-12-2009 | DE 102008027039 A1<br>EP 2294492 A2<br>WO 2009146817 A2 | 10-12-2009<br>16-03-2011<br>10-12-2009 |
| DE 102024102390 A1 | 14-08-2024 | AT 526512 A4<br>CN 118478495 A<br>DE 102024102390 A1<br>US 2024269908 A1 | 15-04-2024<br>13-08-2024<br>14-08-2024<br>15-08-2024 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2762291 A1
- EP 3173208 A1
- EP 3309402 A1